# EUROPEAN PATENT SPECIFICATION

(11) **EP 2 894 577 B1**
(45) Date of publication and mention of the grant of the patent: **03.10.2018**
(21) Application number: 14200142.9
(22) Date of filing: 23.12.2014
(51) Int. Cl.: G06F 17/30, G06K 9/62

(54) **RETRIEVING SYSTEM, RETRIEVING METHOD, AND SECURITY INSPECTION DEVICE BASED ON CONTENTS OF FLUOROSCOPIC IMAGES**
ABRUFSYSTEM, ABRUFVERFAHREN UND SICHERHEITSINSPEKTIONSVORRICHTUNG AUF BASIS DER INHALTE FLUOROSKOPISCHER BILDER
SYSTÈME ET PROCÉDÉ DE RÉCUPÉRATION ET DISPOSITIF D'INSPECTION DE SÉCURITÉ FONCTIONNANT À PARTIR DE CONTENUS D'IMAGES FLUOROSCOPIQUES

(30) Priority: 27.12.2013 CN 201310734306
(43) Date of publication of application: 15.07.2015
(60) Divisional application: 18189711.7
(73) Proprietor: Nuctech Company Limited, TongFang Building, Shuangqinglu, Haidian District Beijing 100084 (CN); Tsinghua University, Haidian District, Beijing 100084 (CN)
(72) Inventor: Li, Yuanjing, Beijing 100084 (CN); Zhao, Ziran, Beijing 100084 (CN); Zhang, Jian, Beijing 100084 (CN); Li, Qiang, Beijing 100084 (CN); Gu, Jianping, Beijing 100084 (CN)
(74) Representative: Delumeau, François Guy

(56) References cited:
- WO-A1-2006/007723
- US-A1- 2008 062 262
- US-A1- 2010 166 322
- US-B1- 7 012 256
- Domingo Mery: "X-ray Testing: The State of the Art", The e-Journal of Non-Destructive Testing & Ultrasonics, 1 September 2013 (2013-09-01), pages 1-8, XP055186920, Retrieved from the Internet: URL:http://www.ndt.net/article/ndtnet/2013 /1_Mery.pdf [retrieved on 2015-04-30]
- MUHAMMET BAAA TAN ET AL: "Visual Words on Baggage X-Ray Images", 29 August 2011 (2011-08-29), COMPUTER ANALYSIS OF IMAGES AND PATTERNS, SPRINGER BERLIN HEIDELBERG, BERLIN, HEIDELBERG, PAGE(S) 360 - 368, XP019161534, ISBN: 978-3-642-23671-6 * Sections 1 and 3 *
- Chapter 16: "Image feature extraction" In: William K. Pratt: "Digital Image Processing, Third Edition", 31 December 2001 (2001-12-31), John Wiley & Sons, Inc. ISBN: 0-471-22132-5 pages 509-550,

## Description

### TECHNICAL FIELD

The present invention relates to the crossing fields of radiation imaging, image understanding, machine learning, auxiliary examination and inspection, and the like, and in particular, to a retrieving system based on contents of fluoroscopic images picked up via radiation during security inspection.

Document US 2008/062262 A discloses an apparatus for performing a security screening operation to detect presence of prohibited objects in receptacles based on fluoroscopic images. Chapter 16 of the 2001 book "Digital image processing" by William Pratt discloses image feature extraction techniques. M. Ba 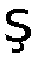 tan at al., "Visual words on baggage X-ray images", 2011 discloses a method for the classification and retrieval of X-ray images.

### BACKGROUND

Radiation fluoroscopic imaging technology is a major means for noninvasive inspection on articles, luggage, or the like, and has been currently widely used at air ports, customs, bus stations, large gatherings, and the like sites. The physical mechanism of radiation imaging causes the image feature presented to be notably different from a natural image. The difference directly causes the security inspection personnel not to perceptually understand image content. What is worse, the security inspection personnel's sensitivity on hazardous articles is extremely reduced. Therefore, the technical solution of globally or partially retrieving inspection fluoroscopic images to find similar images from a database, and giving annotation information such as similarity, target attribute (atomic number range, and weight and thickness ranges), and hazardous extent, is urgently desired. At present, in the field of security inspection, retrieval of the fluoroscopic images is mainly based on file name and time, without introducing any content information of the fluoroscopic images. With popularity of the radiation security inspection devices, a large amount of history image data is generated. If no convenient retrieval and comparison means is available, the large amount of history image data exerts no positive effects.

Currently, in the field of retrieval based on image contents, natural images and medical fluoroscopic images are mainly concentrated. Content retrieval of the natural images has gained rapid development in recent years, and a plurality of practical products have been developed, for example, Google image retrieving system, Baidu image retrieving system, and the like. Content retrieval of the medical fluoroscopic images mainly concerns accurate and precise search from the database for other patients having the same examination area, such that the doctor conveniently determines differences of pathological changes in the same examination area of different patients. However, such systems are still in the trial stage currently. Since the medical image data content is single, the data cannot be directly applied to the more widely used radiation fluoroscopic images.

In recent years, with rapid development of machine learning, mode recognition, and the like fields, such auxiliary means of quickly searching for fluoroscopic images having similar contents and providing these fluoroscopic images to the security inspection personnel for comparison and analysis has become a focus in the industry. However, due to complexity of the article categories and particularity of the fluoroscopic images, the field never sees fast development and promotion, and no relevant publication has been found.

### SUMMARY

In view of practical circumstances of fluoroscopic images picked up during security inspection-a variety categories of articles to be scanned, superimposition of article structural information, high natural expression information loss and low image resolution, and actual needs of helping security inspection personnel to better understand and inspect fluoroscopic images, the present invention provides a system capable of retrieving fluoroscopic images based on contents of the fluoroscopic images and outputting a diversified (similar contents but different article categories) retrieval result and relevant annotation information.

The retrieving system mainly implements the following functions: (1) fuzzy retrieval of image contents, providing a diversified (similar contents but different article categories) retrieval result; (2) parallel computation, achieving real-time return of the retrieval result; (3) providing annotation information of the retrieval result, such as similarity, target attribute, commonality, risk extent, and the like; (4) automatically regulating the retrieval model according to user's feedback information. The retrieving system may be mainly used to train security inspection personnel for better understanding of X-ray images, help the security inspection personnel to analyze image contents, and improve the inspection efficiency.

According to an embodiment of the present invention, a retrieving system based on contents of fluoroscopic images picked up during security inspection is provided. The retrieving system includes:
a pre-classifying module, configured to pre-classify fluoroscopic images, and classify the fluoroscopic images into texture images and non-texture images;
an image content feature extracting module, configured to perform feature extraction for contents of the fluoroscopic images;
an image representing module, configured to combine feature description vectors of the contents of the fluoroscopic images, and construct an image representation vector;
a retrieving module, configured to retrieve, from a fluoroscopic image representation database based on a retrieval model, a plurality of images having a higher similarity to the image representation vectors under retrieval, and thereby constructing a result of preliminary candidates;
a diversified filtering module, configured to filter the result of preliminary candidates, select an image subset capable of covering a plurality of article categories, and thereby construct a diversified retrieval result;
a correlation feedback regulating module, configured to receive information feedback on the retrieval result from a user, and update the retrieval model; and
an interacting module, configured to display the retrieval result, and collect feedback on user's satisfaction of the retrieval result.

The retrieving system implements fuzzy retrieval of image contents, and provides a diversified (similar contents but different article categories) retrieval result; by means of parallel computation, achieves real-time return of the retrieval result; and provides annotation information of the retrieval result, such as similarity, target attribute, commonality, risk extent, and the like. According to user's feedback information, the retrieving system is also capable of automatically regulating the retrieval model.

Preferably, the image content feature extracting module is configured to: with respect to a texture image, establish an image pyramid, perform super pixel classification layer by layer, and establish a texture description vector using a super pixel as a unit; and with respect to a non-texture image, establish an image pyramid, perform feature point detection pixel by pixel and layer by layer, and establish a feature description vector for a detected feature point.

Preferably, the image representing module is configured to: with respect to a texture image, by using a codebook policy, collect statistics for all the texture description vectors established using a super pixel as a unit, establish a histogram, and use the histogram as a representation vector of the image; and with respect to a non-texture image, aggregate all feature description vectors established on feature points, thereby construct a feature vector set, and use the feature vector set as a representation vector of the image.

Preferably, the retrieving module is configured to: with respect to a texture image, represent the image using a feature vector; and with respect to a non-texture image, represent the image using a feature vector set.

Preferably, the interacting module employs a two-stage tree-like display solution: selecting a retrieval region on a scanning image via a mouse; upon selecting the retrieval region, displaying in real time two-stage tree-like retrieval results around the retrieval region, a first stage of displaying an output result from the diversified filtering module, and a second stage of displaying other similar images that are in the same article category as a previous stage; when the mouse slides over a node at either of the two stages, displaying a selection label for user's satisfaction on the retrieval results; and when feedback information is acquired, sending the feedback information to the correlation feedback regulating module.

According to another embodiment of the present invention, a retrieving method based on contents of fluoroscopic images is further provided. The retrieving method includes:
a pre-classification step: pre-classifying fluoroscopic images, and classifying the fluoroscopic images into texture images and non-texture images;
an image content feature extraction step: performing feature extraction for contents of the fluoroscopic images;
an image representation step: combining feature description vectors of the contents of the fluoroscopic images, and constructing an image representation vector;
a retrieval step: retrieving, from a fluoroscopic image representation database based on a retrieval model, a plurality of images having a higher similarity to the image representation vectors under retrieval, and thereby constructing a result of preliminary candidates;
a diversified filtering step: filtering the result of preliminary candidates, selecting an image subset capable of covering a plurality of article categories, and thereby constructing a diversified retrieval result;
a correlation feedback regulation step: receiving information feedback on the retrieval result from a user, and updating the retrieval model; and
an interaction step: displaying the retrieval result, and collecting feedback on user's satisfaction of the retrieval result.

In a particular embodiment of the retrieving method, the image content feature extraction step comprises:
with respect to a texture image, establishing an image pyramid, building super-pixels layer by layer, and establishing a texture description vector for every super-pixel; and
with respect to a non-texture image, establishing an image pyramid, performing feature point detection pixel by pixel and layer by layer, and establishing a feature description vector for a detected feature point.

In a particular embodiment of the retrieving method, the image representation step comprises:
with respect to a texture image, by using a codebook policy, collecting statistics for all the texture description vectors established using a super pixel as a unit, establishing a histogram, and using the histogram as a representation vector of the image; and
with respect to a non-texture image, aggregating all feature description vectors established on feature points, thereby constructing a feature vector set, and using the feature vector set as a representation vector of the image.

In a particular embodiment of the retrieving method, the retrieval step comprises:
with respect to a texture image, representing the image using a feature vector; and
with respect to a non-texture image, representing the image using a feature vector set.

In a particular embodiment of the retrieving method, in the interaction step, a two-stage tree-like display solution is employed: selecting a retrieval region on a scanning image via a mouse; upon selecting the retrieval region, displaying in real time two-stage tree-like retrieval results around the retrieval region, a first stage of displaying an output result from the diversified filtering step, and a second stage of displaying other similar images that are in the same article category as a previous stage; when the mouse slides over a node at either of the two stages, displaying a selection label for user's satisfaction on the retrieval results; and when feedback information is acquired, sending the feedback information to the correlation feedback regulation step.

In a particular embodiment, the retrieving method further comprises establishment and update of the fluoroscopic image representation database:
subjecting all fluoroscopic images, in a fluoroscopic image database, for which no image representation is constructed to the pre-classification step to obtain a preliminary judgment (texture images or non-texture images) on the contents of the fluoroscopic images; performing the image content feature extraction step to obtain feature vectors describing the contents of the fluoroscopic images; and performing the image representation step to construct image representations, and storing the image representations in the fluoroscopic image representation database.

In a particular embodiment, the retrieving method further comprises update of the retrieval model based on user information feedback:
via the interaction step, evaluating, by the user, satisfaction on a retrieval result returned by a retrieval engine, and feeding back an evaluation result to a retrieving system; and regulating, by the retrieving system, model parameters according to the evaluation result feedback, and triggering an update process of the fluoroscopic image representation database.

In a particular embodiment the retrieving method further comprises update of a fluoroscopic image database:
submitting, by the user, a to-be-retrieved image to the fluoroscopic image database, to automatically trigger a building process of the fluoroscopic image representation database, thereby achieving synchronization between the fluoroscopic image database and the fluoroscopic image representation database.

The invention also relates to a security inspection device, comprising a retrieving system based on contents of fluoroscopic images as mentioned above.

According to still another embodiment of the present invention, a computer program is further provided. The computer program performs any one of the above methods when being executed on a processor of a device.

### BRIEF DESCRIPTION OF THE DRAWINGS

With reference to the embodiments described hereinafter, various details and aspects of the present invention would be clearly illustrated.

In the drawings:
FIG. 1 illustrates a retrieving system based on contents of fluoroscopic images picked up via radiation during security inspection according to an embodiment of the present invention;
FIG. 2 is a schematic diagram of display of a tree-like retrieval result according to the present invention; and
FIG. 3 illustrates a flowchart of a retrieving method based on contents of fluoroscopic images according to an embodiment of the present invention.

### DETAILED DESCRIPTION

To make the objectives, structures, and advantages of the present invention clearer, the present invention is further described in detail with reference to the attached drawings. For brevity of description, only one of multiple possible configurations is illustrated in the drawings and the specification.

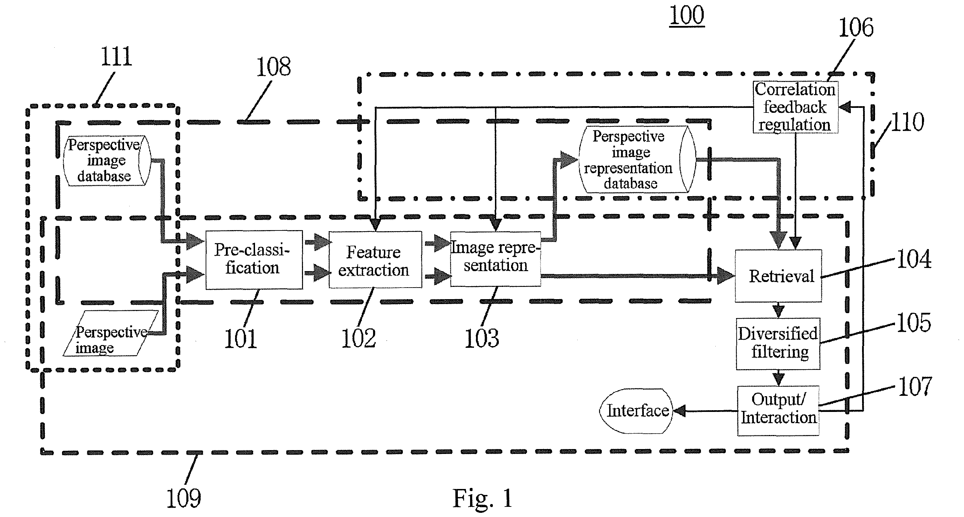

FIG. 1 illustrates a retrieving system 100 based on contents of fluoroscopic images picked up via radiation during security inspection according to an embodiment of the present invention. The retrieving system 100 includes: a pre-classifying module 101, an image content feature extracting module 102, an image representing module 103, a retrieving module 104, a diversified filtering module 105, a correlation feedback regulating module 106, and an interacting module 107.

### Pre-classifying module

The pre-classifying module 101 pre-classifies fluoroscopic images, and classifies the fluoroscopic images into texture images and non-texture images. In the subsequent processing, the retrieving system separately processes the texture images and the non-texture images.

### Image content feature extracting module

The image content feature extracting module 102 performs feature extraction for contents of the fluoroscopic images. Based on a pre-classification result, the texture images and the non-texture images are separately processed.

With respect to a texture image, the image content feature extracting module 102 establishes an image pyramid, performs super pixel classification layer by layer, and establishes a texture description vector using a super pixel as a unit.

With respect to a non-texture image, the image content feature extracting module 102 establishes an image pyramid, performs feature point detection pixel by pixel and layer by layer, and establishes a feature description vector for a detected feature point.

### Image representing module

The image representing module 103 combines feature description vectors of the contents of the fluoroscopic images, and construct an image representation vector. The texture images and the non-texture images are separately processed.

With respect to a texture image, the image representing module 103, by using a codebook policy, collects statistics for all the texture description vectors established using a super pixel as a unit, establishes a histogram, and uses the histogram as a representation vector of the image.

With respect to a non-texture image, the image representing module 103 aggregates all feature description vectors established on feature points, thereby constructs a feature vector set, and uses the feature vector set as a representation vector of the image.

### Retrieving module

The retrieving module 104 retrieves, from a fluoroscopic image representation database based on a retrieval model, a plurality of images having a higher similarity to the image representation vectors under retrieval, and thereby constructs a result of preliminary candidates. By using the retrieval model, the result of preliminary candidates may be quickly obtained.

### Diversified filtering module

The diversified filtering module 105 filters the result of preliminary candidates, selects an image subset capable of covering a plurality of article categories, and thereby constructs a diversified retrieval result.

### Correlation feedback regulating module

The correlation feedback regulating module 106 receives information feedback on the retrieval result from a user, and updates the retrieval model.

### Interacting module

The interacting module 107 displays the retrieval result, and collects feedback on user's satisfaction of the retrieval result.

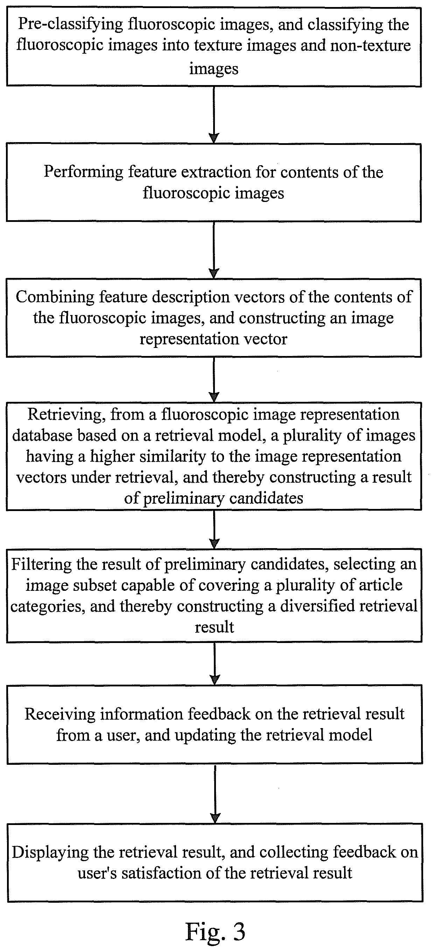

According to another embodiment of the present invention, a retrieving method based on contents of fluoroscopic images picked up during security inspection is further provided. FIG. 3 illustrates a flowchart of the retrieving method. The retrieving method includes: a pre-classification step, an image content feature extraction step, an image representation step, a retrieval step, a diversified filtering step, a correlation feedback regulation step, and an interaction step.

### Pre-classification step

In the pre-classification step, fluoroscopic images are pre-classified, and the fluoroscopic images are classified into texture images and non-texture images. In the subsequent processing, the retrieving system separately processes the texture images and the non-texture images.

### Image content feature extraction step

In the image content feature extraction step: feature extraction is performed for contents of the fluoroscopic images. Based on a pre-classification result, the texture images and the non-texture images are separately processed.

With respect to a texture image, an image pyramid is established, super pixel classification is performed layer by layer, and a texture description vector is established using a super pixel as a unit.

With respect to a non-texture image, an image pyramid is established, feature point detection is performed pixel by pixel and layer by layer, and a feature description vector is established for a detected feature point.

### Image representation step

In the image representation step, feature description vectors of the contents of the fluoroscopic images are combined, and an image representation vector is constructed. The texture images and the non-texture images are separately processed.

With respect to a texture image, by using a codebook policy, statistics for all the texture description vectors established using a super pixel as a unit are collected, a histogram is established, and the histogram is used as a representation vector of the image.

With respect to a non-texture image, all feature description vectors established on feature points are aggregated, thereby a feature vector set is constructed, and the feature vector set is used as a representation vector of the image.

### Retrieval step

In the retrieval step, a plurality of images having a higher similarity to the image representation vectors under retrieval are retrieved from a fluoroscopic image representation database based on a retrieval model, and thereby a result of preliminary candidates is constructed. By using the retrieval model, the result of preliminary candidates may be quickly obtained.

### Diversified filtering step

In the diversified filtering step, the result of preliminary candidates is filtered, an image subset capable of covering a plurality of article categories is selected, and thereby a diversified retrieval result is constructed.

### Correlation feedback regulation step

In the correlation feedback regulation step, information feedback on the retrieval result is received from a user, and the retrieval model is updated.

### Interaction step

In the interaction step, the retrieval result is displayed, and feedback on user's satisfaction of the retrieval result is collected.

The retrieving system and method based on contents of fluoroscopic images picked up via radiation during security inspection according to the present invention implement fuzzy retrieval of image contents, and provide a diversified (similar contents but different article categories) retrieval result; by means of parallel computation, achieve real-time return of the retrieval result; and provide annotation information of the retrieval result, such as similarity, target attribute, commonality, risk extent, and the like. According to user's feedback information, the retrieving system is also capable of automatically regulating the retrieval model. The retrieving system and method according to the present invention may be mainly used to train security inspection personnel for better understanding of X-ray images, help the security inspection personnel to analyze image contents, and improve the inspection efficiency.

Running of the whole retrieving system/method may also be partitioned into four parts encircled by different dotted lines as illustrated in FIG. 1. The first part illustrates establishment and update of the fluoroscopic image representation database (indicated by 108); the second part illustrates representation computation, retrieval, and diversified filtering of the to-be-retrieved images, and display of the retrieval result (indicated by 109); the third part illustrates acquisition of user information feedback and regulation of the retrieval model (indicated by 110); and the fourth part illustrates update of the fluoroscopic image database (indicated by 111) and synchronization between the fluoroscopic image database and the fluoroscopic image representation database.

Running mechanism of the above-described parts will be described hereinafter:

### (1) Establishment and update of the fluoroscopic image representation database

All fluoroscopic images, in a fluoroscopic image database, for which no image representation is constructed are firstly subjected to the pre-classification step to obtain a preliminary judgment (texture images or non-texture images) on the contents of the fluoroscopic images; then the image content feature extraction step is performed to obtain feature vectors describing the contents of the fluoroscopic images; and finally the image representation step is performed to construct image representations, and the image representations are stored in the fluoroscopic image representation database.

### (2) Retrieval of the fluoroscopic images and display of the retrieval result

The user submits to-be-retrieved images. Firstly, these images are subjected to the pre-classification step to obtain a preliminary judgment on image contents (texture images or non-texture images). Subsequently, the image content feature extraction step is performed to obtain feature vectors describing the contents of the fluoroscopic images. Finally, the image representation step is performed to construct image representation. After the image representations are obtained, the retrieval step is performed to obtain a set of fluoroscopic image representations having a higher similarity to each other from the fluoroscopic image representation database according to the retrieval model, and thereby obtain a result of preliminary candidates. Subsequently, the diversified filtering step is performed to select an image subset capable of covering a plurality of article categories from the result of preliminary candidates. A corresponding fluoroscopic image is selected and output from the fluoroscopic image database according to the index of the subset.

### (3) Update of the retrieval model based on user information feedback

Via the interaction step, the user evaluates satisfaction on the retrieval result returned by a retrieval engine, and feeds back an evaluation result to the retrieving system. The retrieving system regulates model parameters according to the evaluation result feedback, and triggers an update process of the fluoroscopic image representation database.

### (4) Update of the fluoroscopic image database

The user submits a to-be-retrieved image to the fluoroscopic image database, to automatically trigger an establish process of the fluoroscopic image representation database, thereby achieving synchronization between the fluoroscopic image database and the fluoroscopic image representation database.

Without loss of generality, an embodiment of a specific algorithm is illustrated herein.

### Pre-classifying module

The pre-classifying module randomly samples 50 x 50 image blocks on the to-be-retrieved image, and the coverage area of all the sampled image blocks needs to be over 60% of the total area of the image. The image blocks are subjected to a Histogram of Oriented Gradient (HOG) feature description, and are classified by a Support Vector Machine (SVM) classifier.

The HOG feature description is employed herein and an SVM classification model is employed for classification. However, the present invention is not limited to such combination. Any texture feature and classifier may be applied to the present invention.

### Image content feature extracting module

Image content feature extraction is performed on the texture images and the non-texture images using different methods.

With respect to a texture image:

### <1> feature description using a super pixel as a unit

Super pixel segmentation is performed for the images using the Statistical Region Merge (SRM) algorithm to establish a super pixel label graph. The images are sampled at an equal spacing, and an HOG feature description is established in a 20 x 20 region at the sampling site. Based on the super pixel label graph, the HOG feature descriptions at the sampling site of each of the super pixels are combined to construct the HOG feature descriptions of the super pixels.

### <2> Establishment of a super pixel feature dictionary on a training image set

Feature descriptions are established to all the super pixels in each of the training images. HOG feature description vectors of all the super pixels are aggregated to 2000 categories by using the KMeans algorithm. In this way, a super pixel feature dictionary having a capacity of 2000 is constructed. The dictionary would be used in the image representing module.

Herein, the SRM algorithm is used to perform super pixel segmentation, and HOG texture feature description is employed. However, the present invention is not limited to such combination. Any image segmentation algorithm and texture feature description algorithm may be applied to the present invention.

With respect to a non-texture image:
Feature point detection and feature description are performed on the image by using the Scale-Invariant Feature Transform (SIFT) algorithm, and thereby a feature description vector set is constructed.

Herein, the SIFT algorithm is used to perform feature detection and feature description. However, the present invention is not limited to such combination. Any feature point detection algorithm and feature description algorithm may be applied to the present invention.

### Image representing module

The texture images and the non-texture images are represented using different image representation methods.

### With respect to a texture image:

Based on the super pixel feature dictionary, feature descriptions of all the super pixels in the image are quantified, and thereby an image representation vector is constructed. The dimensionality of the representation vector is equal to the capacity of the super pixel feature dictionary, and is extremely sparse.

### With respect to a non-texture image:

The set of the feature vectors of all the feature points is used as the image representation.

### Retrieving module

Euclidean distance is used for similarity comparison.

### With respect to a texture image:

The image representation is indicated by a feature vector. Items relatively similar to the representation of the to-be-retrieved image are searched from the fluoroscopic image representation database using the K Nearest Neighbor (KNN) algorithm, and fluoroscopic image data is obtained from the fluoroscopic image database according to indexes of the items, and the obtained fluoroscopic image data is used as the result of preliminary candidates. A result of preliminary candidates having 200 elements is constructed.

### With respect to a non-texture image:

The image representation is indicated by a feature vector set. With respect to each of the feature vectors in the feature vector set, items similar to the representation of the to-be-retrieved image are searched from the fluoroscopic image representation database using the KNN algorithm, and fluoroscopic image data is obtained from the fluoroscopic image database according to indexes of the items. If at least three feature vectors in the feature vector set point at the same fluoroscopic image, then the fluoroscopic image is added to the result of preliminary candidates. A result of preliminary candidates having 200 elements is constructed.

The similarity comparison herein employs the Euclidean distance. However, the present invention is not limited thereto. Any method for similarity measurement may be applied to the present invention, for example, Manifold Learning, and the like.

### Diversified filtering module

Three images capable of maximally covering different article categories are selected from a preliminary search result using the structural SVM model.

### Correlation feedback regulating module

User's information feedback on the retrieval result is received, and the retrieval model is updated.

### Interacting module

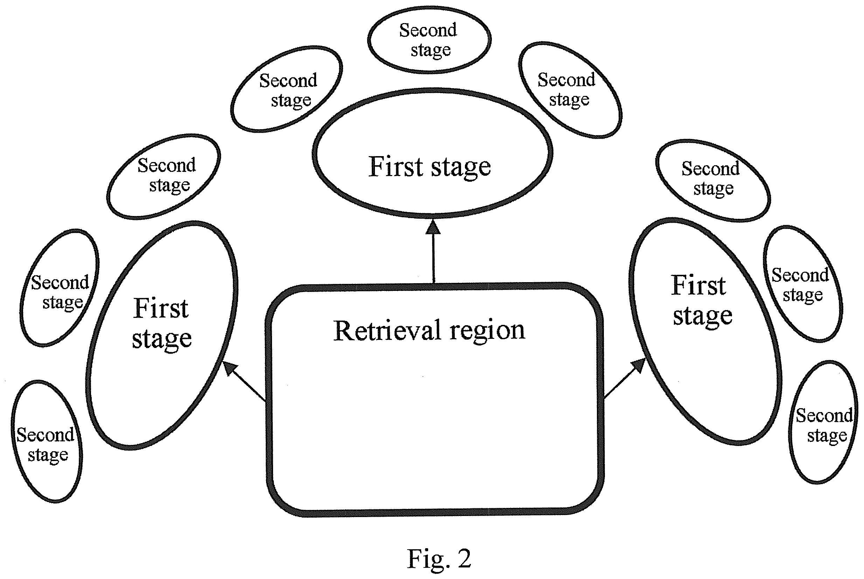

A two-stage tree-like display solution is employed, as illustrated in FIG. 2. A retrieval region is selected on a scanning image via a mouse. Upon selection of the retrieval region, two-stage tree-like retrieval results are displayed in real time around the retrieval region. A first stage is displaying an output result from the diversified filtering module, and a second stage is displaying other similar images that are in the same article category as a previous stage. When the mouse slides over a node at either of the two stages, a selection label for user's satisfaction on the retrieval results is displayed. When feedback information is acquired, the feedback information is sent to the correlation feedback regulating module.

According to a further embodiment of the present invention, a security inspection device is disclosed. The security inspection device includes the retrieving system based on contents of fluoroscopic images as described above.

Although the present invention has been illustrated and described in detail with reference to the drawings and foregoing description, such illustration and description are to be considered illustrative or exemplary but not restrictive. The present invention is not limited to the disclosed embodiments. Other variations to the disclosed embodiments may be understood and effected by a person skilled in the art in practicing the claimed invention, from a study of the drawings, the disclosure and the appended claims.

In the claims and specification, the word "comprising" or "includes" does not exclude other elements or steps, and the infinite article "a" or "an" does not exclude a plurality. A single element or another unit may fulfill functions of several features recited in the claims. The mere fact that certain measures are recited in mutually different dependent claims does not indicate that a combination of these measures cannot be used to advantage. Any reference signs in the claims should not be construed as limiting the scope.

## Claims

1. A retrieving system (100) based on contents of fluoroscopic images, comprising:
an image content feature extracting module (102), configured to perform feature extraction for contents of the fluoroscopic images;
an image representing module (103), configured to construct an image representation;
a retrieving module (104), configured to retrieve, based on a retrieval model, a plurality of images whose image representations have a higher similarity to an image representation under retrieval, and thereby construct a result of preliminary candidates;
a feedback regulating module (106), configured to receive information feedback on the retrieval result from a user, and update the retrieval model; and
an interacting module (107), configured to display the retrieval result, and collect feedback on user's satisfaction of the retrieval result,
**characterized in that** the retrieving system comprises:
a pre-classifying module (101) configured to pre-classify fluoroscopic images and to classify the fluoroscopic images into texture images and non-texture images; and
a diversified filtering module (105) configured to construct a diversified retrieval result by filtering the result of preliminary candidates, using an SVM structural model, to select as the retrieval result an image subset capable of maximally covering a plurality of article categories;
and **in that** the image content feature extracting module (102) is configured to obtain feature vectors of the contents of fluoroscopic images by:
with respect to a texture image, establishing an image pyramid, building super-pixel layer by layer, and establishing a texture description vector for every super-pixel, and
with respect to a non-texture image, establishing an image pyramid, performing feature point detection pixel by pixel and layer by layer, and establishing a feature description vector for a detected feature point;
and **in that** the image representing module (103) is configured to combine feature description vectors of a same image to construct an image representation vector as said image representation.

2. The retrieving system based on contents of fluoroscopic images according to claim 1, wherein the image representing module (103) is configured to:
with respect to a texture image, by using a codebook policy, collect statistics for all the texture description vectors of super-pixels, establish a histogram, and use the histogram as a representation vector of the image; and
with respect to a non-texture image, aggregate all feature description vectors established on feature points, thereby construct a feature vector set, and use the feature vector set as a representation vector of the image.

3. The retrieving system based on contents of fluoroscopic images according to any one of claims 1 to 2, wherein the image representing module (103) is configured to:
with respect to a texture image, represent the image using a feature vector; and
with respect to a non-texture image, represent the image using a feature vector set.

4. The retrieving system based on contents of fluoroscopic images according to any one of claims 1 to 3, wherein the interacting module employs a two-stage tree-like display solution: selecting a retrieval region on a scanning image via a mouse; upon selecting the retrieval region, displaying in real time two-stage tree-like retrieval results around the retrieval region, the first stage of said two-stage displaying consisting of displaying the image subset output from the diversified filtering module, and the second stage of said two-stage displaying comprising displaying other similar images that are in the same article categories, respectively, as the image subset of said first stage; when the mouse slides over a node at either of the two stages, displaying a selection label for user's satisfaction on the retrieval results; and when feedback information is acquired, sending the feedback information to the correlation feedback regulating module.

5. A retrieving method based on contents of fluoroscopic images, comprising:
an image content feature extraction step: performing feature extraction for contents of the fluoroscopic images;
an image representation step: constructing an image representation;
a retrieval step: retrieving, based on a retrieval model, a plurality of images whose image representations have a higher similarity to an image representation under retrieval, and thereby constructing a result of preliminary candidates;
a feedback regulation step: receiving information feedback on the retrieval result from a user, and updating the retrieval model; and
an interaction step: displaying the retrieval result, and collecting feedback on user's satisfaction of the retrieval result,
**characterized in that** the method comprises:
a pre-classification step: pre-classifying fluoroscopic images, and classifying the fluoroscopic images into texture images and non-texture images, and
a diversified filtering step: filtering the result of preliminary candidates, using an SVM structural model, to select an image subset capable of maximally covering a plurality of article categories, and thereby constructing a diversified retrieval result by the selected image subset;
and **in that** the image content feature extraction step comprises obtaining feature description vectors of the contents of the fluoroscopic images by:
with respect to a texture image, establishing an image pyramid, building super-pixels layer by layer, and establishing a texture description vector for every super-pixel; and
with respect to a non-texture image, establishing an image pyramid, performing feature point detection pixel by pixel and layer by layer, and establishing a feature description vector for a detected feature point;
and **in that** the image representation step comprises constructing an image representation vector, as said image representation, by combining feature description vectors of a same image.

6. The retrieving method based on contents of fluoroscopic images according to claim 5, wherein the image representation step comprises:
with respect to a texture image, by using a codebook policy, collecting statistics for all the texture description vectors established using a super pixel as a unit, establishing a histogram, and using the histogram as a representation vector of the image; and
with respect to a non-texture image, aggregating all feature description vectors established on feature points, thereby constructing a feature vector set, and using the feature vector set as a representation vector of the image.

7. The retrieving method based on contents of fluoroscopic images according to any one of claims 5 to 6, wherein the image representation step comprises:
with respect to a texture image, representing the image using a feature vector; and
with respect to a non-texture image, representing the image using a feature vector set.

8. The retrieving method based on contents of fluoroscopic images according to any one of claims 5 to 7, wherein in the interaction step, a two-stage tree-like display solution is employed: selecting a retrieval region on a scanning image via a mouse; upon selecting the retrieval region, displaying in real time two-stage tree-like retrieval results around the retrieval region, the first stage of said two-stage displaying consisting of displaying the image subset output from the diversified filtering step, and the second stage of displaying consisting of displaying other similar images that are in the same article categories, respectively, as the image subset of said first stage; when the mouse slides over a node at either of the two stages, displaying a selection label for user's satisfaction on the retrieval results; and when feedback information is acquired, sending the feedback information to the correlation feedback regulation step.

9. The retrieving method based on contents of fluoroscopic images according to any one of claims 5 to 8, further comprising establishment and update of the fluoroscopic image representation database:
subjecting all fluoroscopic images, in a fluoroscopic image database, for which no image representation is constructed to the pre-classification step to obtain a preliminary judgment (texture images or non-texture images) on the contents of the fluoroscopic images; performing the image content feature extraction step to obtain feature vectors describing the contents of the fluoroscopic images; and performing the image representation step to construct image representations, and storing the image representations in the fluoroscopic image representation database.

10. The retrieving method based on contents of fluoroscopic images according to any one of claims 5 to 9, further comprising update of the retrieval model based on user information feedback:
via the interaction step, evaluating, by the user, satisfaction on a retrieval result returned by a retrieval engine, and feeding back an evaluation result to a retrieving system; and regulating, by the retrieving system, model parameters according to the evaluation result feedback, and updating the fluoroscopic image representation database according to the regulated model parameters.

11. The retrieving method based on contents of fluoroscopic images according to any one claims 5 to 10, further comprising update of a fluoroscopic image database:
submitting, by the user, a to-be-retrieved image to the fluoroscopic image database, to automatically trigger a building process of the fluoroscopic image representation database, thereby achieving synchronization between the fluoroscopic image database and the fluoroscopic image representation database.

12. A security inspection device, comprising a retrieving system based on contents of fluoroscopic images according to any one of claims 1 to 4.

13. A computer program which, when being executed on a processor of a device, performs a method according to any one of claims 5 to 11.

## Patentansprüche

1. Abrufsystem (100), basierend auf Inhalten von Durchleuchtungsbildern, umfassend:
ein Bildinhaltmerkmal-Extraktionsmodul (102), das ausgestaltet ist, um eine Merkmalextraktion für Inhalte der Durchleuchtungsbilder durchzuführen,
ein Bilddarstellungsmodul (103), das ausgestaltet ist, um eine Bilddarstellung zu erstellen,
ein Abrufmodul (104), das ausgestaltet ist, um, basierend auf einem Abrufmodell, eine Vielzahl von Bildern abzurufen, deren Bilddarstellungen eine größere Ähnlichkeit mit einer Bilddarstellung unter Abruf aufweisen, und dadurch ein Ergebnis vorläufiger Kandidaten zu erstellen,
ein Rückmelde-Regelungsmodul (106), das ausgestaltet ist, um eine Informationsrückmeldung über das Abrufergebnis von einem Benutzer zu empfangen und das Abrufmodell zu aktualisieren, und
ein Interaktionsmodul (107), das ausgestaltet ist, um das Abrufergebnis anzuzeigen und eine Rückmeldung über eine Benutzerzufriedenheit des Abrufergebnisses zu erfassen,
**dadurch gekennzeichnet, dass** das Abrufsystem umfasst:
ein Vorklassifizierungsmodul (101), das ausgestaltet ist, um Durchleuchtungsbilder vorzuklassifizieren und um die Durchleuchtungsbilder in Texturbilder und Nicht-Texturbilder zu klassifizieren, und
ein Modul diversifizierten Filterns (105), das ausgestaltet ist, um ein diversifiziertes Abrufergebnis durch Filtern des Ergebnisses vorläufiger Kandidaten unter Verwendung eines SVM-Strukturmodells zu erstellen, um als das Abrufergebnis eine Bilduntergruppe auszuwählen, die in der Lage ist, eine Vielzahl von Gegenstandskategorien maximal abzudecken,
und dadurch, dass das Bildinhaltmerkmal-Extraktionsmodul (102) ausgestaltet ist, um Merkmalvektoren der Inhalte von Durchleuchtungsbildern zu beschaffen durch:
mit Bezug auf ein Texturbild Herstellen einer Bildpyramide, Erstellen von Superpixeln Schicht für Schicht und für jedes Superpixel Herstellen eines Texturbeschreibungsvektors, und
mit Bezug auf ein Nicht-Texturbild Herstellen einer Bildpyramide, Durchführen einer Merkmalpunktdetektion Pixel für Pixel und Schicht für Schicht und Herstellen eines Merkmalbeschreibungsvektors für einen detektierten Merkmalpunkt,
und dadurch, dass das Bilddarstellungsmodul (103) ausgestaltet ist, um Merkmalbeschreibungsvektoren eines gleichen Bildes zu kombinieren, um einen Bilddarstellungsvektor als die Bilddarstellung zu erstellen.

2. Abrufsystem, basierend auf Inhalten von Durchleuchtungsbildern, nach Anspruch 1, wobei das Bilddarstellungsmodul (103) ausgestaltet ist, um:
mit Bezug auf ein Texturbild durch Verwendung einer Codebuch-Strategie Statistiken für alle Texturbeschreibungsvektoren von Superpixeln zu erfassen, ein Histogramm herzustellen und das Histogramm als einen Darstellungsvektor des Bildes zu verwenden, und
mit Bezug auf ein Nicht-Texturbild alle an Merkmalpunkten hergestellten Merkmalbeschreibungsvektoren zu kumulieren, um dadurch einen Merkmalvektorsatz zu erstellen, und den Merkmalvektorsatz als einen Darstellungsvektor des Bildes zu verwenden.

3. Abrufsystem, basierend auf Inhalten von Durchleuchtungsbildern, nach einem der Ansprüche 1 bis 2, wobei das Bilddarstellungsmodul (103) ausgestaltet ist, um:
mit Bezug auf ein Texturbild das Bild unter Verwendung eines Merkmalvektors darzustellen, und
mit Bezug auf ein Nicht-Texturbild das Bild unter Verwendung eines Merkmalvektorsatzes darzustellen.

4. Abrufsystem, basierend auf Inhalten von Durchleuchtungsbildern, nach einem der Ansprüche 1 bis 3, wobei das Interaktionsmodul eine zweistufige, baumartige Anzeigelösung einsetzt: Auswählen einer Abrufregion auf einem Abtastbild mithilfe einer Maus, nach dem Auswählen der Abrufregion in Echtzeit Anzeigen zweistufiger, baumartiger Abrufergebnisse um die Abrufregion herum, wobei die erste Stufe des zweistufigen Anzeigens aus dem Anzeigen der von dem Modul diversifizierten Filterns ausgegebenen Bilduntergruppe besteht und die zweite Stufe des zweistufigen Anzeigens das Anzeigen anderer ähnlicher Bilder, die sich jeweils in denselben Gegenstandskategorien befinden wie die Bilduntergruppe der ersten Stufe, umfasst, wenn die Maus über einen Knoten an einer der beiden Stufen gleitet, Anzeigen einer Auswahlmarkierung für eine Benutzerzufriedenheit über die Abrufergebnisse, und, wenn Rückmeldeinformation gewonnen wird, Senden der Rückmeldeinformation an das Korrelationsrückmelde-Regelungsmodul.

5. Abrufverfahren, basierend auf Inhalten von Durchleuchtungsbildern, umfassend:
einen Bildinhaltmerkmal-Extraktionsschritt: Durchführen einer Merkmalextraktion für Inhalte der Durchleuchtungsbilder,
einen Bilddarstellungsschritt: Erstellen einer Bilddarstellung,
einen Abrufschritt: basierend auf einem Abrufmodell, Abrufen einer Vielzahl von Bildern, deren Bilddarstellungen eine größere Ähnlichkeit mit einer Bilddarstellung unter Abruf aufweisen, und dadurch Erstellen eines Ergebnisses vorläufiger Kandidaten,
einen Rückmelde-Regelungsschritt: Empfangen einer Informationsrückmeldung über das Abrufergebnis von einem Benutzer und Aktualisieren des Abrufmodells, und
einen Interaktionsschritt: Anzeigen des Abrufergebnisses und Erfassen einer Rückmeldung über eine Benutzerzufriedenheit des Abrufergebnisses,
**dadurch gekennzeichnet, dass** das Verfahren umfasst:
einen Vorklassifizierungsschritt: Vorklassifizieren von Durchleuchtungsbildern und Klassifizieren der Durchleuchtungsbilder in Texturbilder und Nicht-Texturbilder, und
einen Schritt diversifizierten Filterns: Filtern des Ergebnisses vorläufiger Kandidaten unter Verwendung eines SVM-Strukturmodells, um eine Bilduntergruppe auszuwählen, die in der Lage ist, eine Vielzahl von Gegenstandskategorien maximal abzudecken und dadurch ein diversifiziertes Abrufergebnis durch die ausgewählte BildUntergruppe zu erstellen,
und dadurch, dass der Bildinhaltmerkmal-Extraktionsschritt das Beschaffen von Merkmalbeschreibungsvektoren der Inhalte der Durchleuchtungsbilder durch:
mit Bezug auf ein Texturbild Herstellen einer Bildpyramide, Erstellen von Superpixeln Schicht für Schicht und Herstellen eines Texturbeschreibungsvektors für jedes Superpixel, und
mit Bezug auf ein Nicht-Texturbild Herstellen einer Bildpyramide, Durchführen einer Merkmalpunktdetektion Pixel für Pixel und Schicht für Schicht und Herstellen eines Merkmalbeschreibungsvektors für einen detektierten Merkmalpunkt,
und dadurch, dass der Bilddarstellungsschritt das Erstellen eines Bilddarstellungsvektors als die Bilddarstellung durch Kombinieren von Merkmalbeschreibungsvektoren eines gleichen Bildes umfasst.

6. Abrufverfahren, basierend auf Inhalten von Durchleuchtungsbildern, nach Anspruch 5, wobei der Bilddarstellungsschritt umfasst:
mit Bezug auf ein Texturbild durch Verwendung einer Codebuch-Strategie Erfassen von Statistiken für alle Texturbeschreibungsvektoren, die unter Verwendung eines Superpixels als eine Einheit hergestellt wurden, Herstellen eines Histogramms und Verwenden des Histogramms als einen Darstellungsvektor des Bildes und
mit Bezug auf ein Nicht-Texturbild Kumulieren aller an Merkmalpunkten hergestellten Merkmalbeschreibungsvektoren, um dadurch einen Merkmalvektorsatz zu erstellen, und Verwenden des Merkmalvektorsatzes als einen Darstellungsvektor des Bildes.

7. Abrufverfahren, basierend auf Inhalten von Durchleuchtungsbildern, nach einem der Ansprüche 5 bis 6, wobei der Bilddarstellungsschritt umfasst:
mit Bezug auf ein Texturbild Darstellen des Bildes unter Verwendung eines Merkmalvektors, und
mit Bezug auf ein Nicht-Texturbild Darstellen des Bildes unter Verwendung eines Merkmalvektorsatzes.

8. Abrufverfahren, basierend auf Inhalten von Durchleuchtungsbildern, nach einem der Ansprüche 5 bis 7, wobei in dem Interaktionsschritt eine zweistufige, baumartige Anzeigelösung eingesetzt wird: Auswählen einer Abrufregion auf einem Abtastbild mithilfe einer Maus, nach dem Auswählen der Abrufregion in Echtzeit Anzeigen zweistufiger, baumartiger Abrufergebnisse um die Abrufregion herum, wobei die erste Stufe des Anzeigens aus dem Anzeigen der von dem Modul diversifizierten Filterns ausgegebenen Bilduntergruppe besteht und die zweite Stufe des zweistufigen Anzeigens aus dem Anzeigen anderer ähnlicher Bilder, die sich jeweils in denselben Gegenstandskategorien befinden wie die Bilduntergruppe der ersten Stufe, besteht, wenn die Maus über einen Knoten an einer der beiden Stufen gleitet, Anzeigen einer Auswahlmarkierung für die Benutzerzufriedenheit über die Abrufergebnisse, und, wenn Rückmeldeinformation gewonnen wird, Senden der Rückmeldeinformation an den Korrelationsrückmelde-Regelungsschritt.

9. Abrufverfahren, basierend auf Inhalten von Durchleuchtungsbildern, nach einem der Ansprüche 5 bis 8, ferner umfassend die Herstellung und die Aktualisierung der Durchleuchtungsbilddarstellungs-Datenbank:
Unterziehen aller Durchleuchtungsbilder in einer Durchleuchtungsbild-Datenbank, für die keine Bilddarstellung erstellt wird, dem Vorklassifizierungsschritt, um eine vorläufige Beurteilung (Texturbilder oder Nicht-Texturbilder) über die Inhalte der Durchleuchtungsbilder zu beschaffen, Durchführen des Bildinhaltmerkmal-Extraktionsschrittes, um Merkmalvektoren zu beschaffen, die die Inhalte der Durchleuchtungsbilder beschreiben, und Durchführen des Bilddarstellungsschrittes, um Bilddarstellungen zu erstellen, und Speichern der Bilddarstellungen in der Durchleuchtungsbilddarstellungs-Datenbank.

10. Abrufverfahren, basierend auf Inhalten von Durchleuchtungsbildern, nach einem der Ansprüche 5 bis 9, ferner umfassend eine Aktualisierung des Abrufmodells basierend auf einer Benutzerinformations-Rückmeldung:
über den Interaktionsschritt Bewerten durch den Benutzer der Zufriedenheit über ein durch eine Abrufmaschine zurückgeführtes Abrufergebnis und Rückmelden eines Bewertungsergebnisses an ein Abrufsystem, und durch das Abrufsystem Regulieren von Modellparametern gemäß der Bewertungsergebnisrückmeldung und Aktualisieren der Durchleuchtungsbilddarstellungs-Datenbank gemäß den regulierten Modellparametern.

11. Abrufverfahren, basierend auf Inhalten von Durchleuchtungsbildern, nach einem der Ansprüche 5 bis 10, ferner umfassend eine Aktualisierung einer Durchleuchtungsbild-Datenbank:
Zusenden eines abzurufenden Bildes an die Durchleuchtungsbild-Datenbank durch den Benutzer, um automatisch einen Erstellungsprozess der Durchleuchtungsbilddarstellungs-Datenbank auszulösen, um dadurch eine Synchronisierung zwischen der Durchleuchtungsbild-Datenbank und der Durchleuchtungsbilddarstellungs-Datenbank zu erreichen.

12. Sicherheitsüberprüfungsvorrichtung, umfassend ein Abrufsystem, basierend auf Inhalten von Durchleuchtungsbildern nach einem der Ansprüche 1 bis 4.

13. Computerprogramm, das, wenn es auf einem Prozessor einer Vorrichtung ausgeführt wird, ein Verfahren nach einem der Ansprüche 5 bis 11 durchführt.

## Revendications

1. Système d'extraction (100) basé sur des contenus d'images fluoroscopiques, comprenant :
un module de récupération de caractéristique de contenu d'image (102), configuré pour réaliser une récupération de caractéristique pour des contenus des images fluoroscopiques ;
un module de représentation d'image (103), configuré pour construire une représentation d'image ;
un module d'extraction (104), configuré pour extraire, sur la base d'un modèle d'extraction, une pluralité d'images dont les représentations d'image présentent une similarité plus élevée à une représentation d'image en cours d'extraction, et ce faisant construire un résultat de candidats préliminaires ;
un module d'ajustement de rétroaction (106), configuré pour recevoir une rétroaction d'information sur le résultat d'extraction depuis un utilisateur et actualiser le modèle d'extraction ; et
un module d'interaction (107), configuré pour afficher le résultat d'extraction et recueillir une rétroaction sur une satisfaction utilisateur du résultat d'extraction,
**caractérisé en ce que** le système d'extraction comprend :
un module de pré-classification (101) configuré pour pré-classifier des images fluoroscopiques et pour classifier les images fluoroscopiques en images texture et images non-texture ; et
un module de filtrage diversifié (105) configuré pour construire un résultat d'extraction diversifié en filtrant le résultat de candidats préliminaires, à l'aide d'un modèle structurel SVM (machine a vecteur de support : « support vector machine » en anglais), pour sélectionner en tant que résultat d'extraction un sous-ensemble d'images à même de couvrir au maximum une pluralité de catégories d'articles ;
et **en ce que** le module de récupération de caractéristique de contenu d'image (102) est configuré pour obtenir des vecteurs de caractéristique des contenus d'images fluoroscopiques en :
en ce qui concerne une image texture, établissant une pyramide d'image, construisant un super-pixel couche par couche et établissant un vecteur de description de texture pour chaque super-pixel, et
en ce qui concerne une image non-texture, établissant une pyramide d'image, réalisant une détection de point de caractéristique pixel par pixel et couche par couche, et établissant un vecteur de description de caractéristique pour un point de caractéristique détecté ;
et **en ce que** le module de représentation d'image (103) est configuré pour combiner des vecteurs de description de caractéristique d'une même image pour construire un vecteur de représentation d'image en tant que ladite représentation d'image.

2. Système d'extraction basé sur des contenus d'images fluoroscopiques selon la revendication 1, dans lequel le module de représentation d'image (103) est configuré pour :
en ce qui concerne une image texture, à l'aide d'une politique de livre de codage, recueillir des statistiques pour tous les vecteurs de description de texture de super-pixels, établir un histogramme et utiliser l'histogramme en tant que vecteur de représentation de l'image ; et
en ce qui concerne une image non-texture, agréger tous les vecteurs de description de caractéristique établis sur des points de caractéristique, ce faisant construire un ensemble de vecteurs de caractéristique et utiliser l'ensemble de vecteurs de caractéristique en tant que vecteur de représentation de l'image.

3. Système d'extraction basé sur des contenus d'images fluoroscopiques selon l'une quelconque des revendications 1 à 2, dans lequel le module de représentation d'image (103) est configuré pour :
en ce qui concerne une image texture, représenter l'image à l'aide d'un vecteur de caractéristique ; et
en ce qui concerne une image non-texture, représenter l'image à l'aide d'un ensemble de vecteurs de caractéristique.

4. Système d'extraction basé sur des contenus d'images fluoroscopiques selon l'une quelconque des revendications 1 à 3, dans lequel le module d'interaction emploie une solution d'affichage arborescent à deux niveaux : sélection d'une région d'extraction sur une image de balayage via une souris ; une fois la région d'extraction sélectionnée, affichage en temps réel des résultats d'extraction arborescents à deux niveaux autour de la région d'extraction, le premier niveau dudit affichage à deux niveaux consistant à afficher le sous-ensemble d'images sorti depuis le module de filtrage diversifié, et le second niveau dudit affichage à deux niveaux comprenant l'affichage d'autres images similaires qui sont dans les même catégories d'article, respectivement, en tant que sous-ensemble d'images dudit premier niveau ; lorsque la souris glisse par-dessus un noeud à l'un quelconque des deux niveaux, affichage d'un label de sélection pour une satisfaction utilisateur sur les résultats d'extraction ; et lorsqu'une information de rétroaction est acquise, envoi de l'information de rétroaction au module d'ajustement de rétroaction de corrélation.

5. Procédé d'extraction basé sur des contenus d'images fluoroscopiques, comprenant :
une étape de récupération de caractéristique de contenu d'image : réalisation d'une récupération de caractéristique pour des contenus des images fluoroscopiques ;
une étape de représentation d'image : construction d'une représentation d'image ;
une étape d'extraction : extraction, sur la base d'un modèle d'extraction, d'une pluralité d'images dont les représentations d'image présentent une similarité plus élevée à une représentation d'image étant extraite, et ce faisant construction d'un résultat de candidats préliminaires ;
une étape d'ajustement de rétroaction : réception d'une rétroaction d'information sur le résultat d'extraction depuis un utilisateur et actualisation du modèle d'extraction ; et
une étape d'interaction : affichage du résultat d'extraction et recueil d'une rétroaction sur une satisfaction utilisateur du résultat d'extraction,
**caractérisé en ce que** le procédé comprend :
une étape de pré-classification : pré-classification d'images fluoroscopiques et classification des images fluoroscopiques en images texture et images non-texture, et
une étape de filtrage diversifié : filtrage du résultat de candidats préliminaires, à l'aide d'un modèle structurel SVM, pour sélectionner un sous-ensemble d'images à même de couvrir au maximum une pluralité de catégories d'articles, et ce faisant construction d'un résultat d'extraction diversifié avec le sous-ensemble d'images sélectionné ;
et **en ce que** l'étape de récupération de caractéristique de contenu d'image comprend l'obtention de vecteurs de description de caractéristique des contenus des images fluoroscopiques en :
en ce qui concerne une image texture, établissant une pyramide d'image, construisant des super-pixels couche par couche et établissant un vecteur de description de texture pour chaque super-pixel ; et
en ce qui concerne une image non-texture, établissant une pyramide d'image, réalisant une détection de point de caractéristique pixel par pixel et couche par couche, et établissant un vecteur de description de caractéristique pour un point de caractéristique détecté ;
et **en ce que** l'étape de représentation d'image comprend la construction d'un vecteur de représentation d'image, en tant que ladite représentation d'image, en combinant des vecteurs de description de caractéristique d'une même image.

6. Procédé d'extraction basé sur des contenus d'images fluoroscopiques selon la revendication 5, dans lequel l'étape de représentation d'image comprend :
en ce qui concerne une image texture, à l'aide d'une politique de livre de codage, le recueil de statistiques pour tous les vecteurs de description de texture établis à l'aide d'un super-pixel en tant qu'unité, l'établissement d'un histogramme et l'utilisation de l'histogramme en tant que vecteur de représentation de l'image ; et
en ce qui concerne une image non-texture, agrégation de tous les vecteurs de description de caractéristique établis sur des points de caractéristique, ce faisant construction d'un ensemble de vecteurs de caractéristique et utilisation de l'ensemble de vecteurs de caractéristique en tant que vecteur de représentation de l'image.

7. Procédé d'extraction basé sur des contenus d'images fluoroscopiques selon l'une quelconque des revendications 5 à 6, dans lequel l'étape de représentation d'image comprend :
en ce qui concerne une image texture, la représentation de l'image à l'aide d'un vecteur de caractéristique ; et
en ce qui concerne une image non-texture, la représentation de l'image à l'aide d'un ensemble de vecteurs de caractéristique.

8. Procédé d'extraction basé sur des contenus d'images fluoroscopiques selon l'une quelconque des revendications 5 à 7, dans lequel dans l'étape d'interaction, une solution d'affichage arborescent à deux niveaux est employée : sélection d'une région d'extraction sur une image de balayage via une souris ; une fois la région d'extraction sélectionnée, affichage en temps réel des résultats d'extraction arborescents à deux niveaux autour de la région d'extraction, le premier niveau dudit affichage à deux niveaux consistant à afficher le sous-ensemble d'images sorti depuis l'étape de filtrage diversifié, et le second niveau d'affichage consistant à afficher d'autres images similaires qui sont dans les même catégories d'article, respectivement, en tant que sous-ensemble d'images dudit premier niveau ; lorsque la souris glisse par-dessus un noeud à l'un quelconque des deux niveaux, affichage d'un label de sélection pour une satisfaction utilisateur sur les résultats d'extraction ; et lorsqu'une information de rétroaction est acquise, envoi de l'information de rétroaction à l'étape d'ajustement de rétroaction de corrélation.

9. Procédé d'extraction basé sur des contenus d'images fluoroscopiques selon l'une quelconque des revendications 5 à 8, comprenant en outre l'établissement et l'actualisation de la base de données de représentations d'images fluoroscopiques :
soumission de toutes les images fluoroscopiques, dans une base de données d'images fluoroscopiques, pour lesquelles aucune représentation d'image n'a été construite, à l'étape de pré-classification pour obtenir un jugement préliminaire (images texture ou images non-texture) sur les contenus des images fluoroscopiques ; réalisation de l'étape de récupération de caractéristique de contenu d'image pour obtenir des vecteurs de caractéristique décrivant les contenus des images fluoroscopiques ; et réalisation de l'étape de représentation d'image pour construire des représentations d'image, et stockage des représentations d'image dans la base de données de représentations d'images fluoroscopiques.

10. Procédé d'extraction basé sur des contenus d'images fluoroscopiques selon l'une quelconque des revendications 5 à 9, comprenant en outre l'actualisation du modèle d'extraction sur la base d'une rétroaction d'information d'utilisateur :
via l'étape d'interaction, évaluation, par l'utilisateur, d'une satisfaction sur un résultat d'extraction retourné par un moteur d'extraction, et envoi par rétroaction d'un résultat d'évaluation à un système d'extraction ; et ajustement, par le système d'extraction, de paramètres de modèle en fonction de la rétroaction de résultat d'évaluation, et actualisation de la base de données de représentations d'images fluoroscopiques en fonction des paramètres de modèle ajustés.

11. Procédé d'extraction basé sur des contenus d'images fluoroscopiques selon l'une quelconque des revendications 5 à 10, comprenant en outre une actualisation d'une base de données d'images fluoroscopiques :
soumission, par l'utilisateur, d'une image à extraire à la base de données d'images fluoroscopiques, pour automatiquement déclencher un processus de construction de la base de données de représentations d'images fluoroscopiques, ce faisant réalisation d'une synchronisation entre la base de données d'images fluoroscopiques et la base de données de représentations d'images fluoroscopiques.

12. Dispositif d'inspection de sécurité, comprenant un système d'extraction basé sur des contenus d'images fluoroscopiques selon l'une quelconque des revendications 1 à 4.

13. Programme d'ordinateur qui, lorsqu'exécuté sur un processeur d'un dispositif, réalise un procédé selon l'une quelconque des revendications 5 à 11.
